# EUROPEAN PATENT SPECIFICATION

(11) **EP 1 517 058 B1**
(45) Date of publication and mention of the grant of the patent: **01.05.2013**
(21) Application number: 04022216.8
(22) Date of filing: 17.09.2004
(51) Int. Cl.: F16C 33/62

(54) **Rolling bearing part and method for manufacturing the same**
Teil eines Walzlagers und Verfahren zu seiner Herstellung
Elément de roulement et sa méthode de fabrication

(30) Priority: 19.09.2003 JP 2003327431
(43) Date of publication of application: 23.03.2005
(73) Proprietor: JTEKT Corporation, Osaka-shi Osaka 542-8502 (JP)
(72) Inventor: Goto, Masao, Chuo-ku, Osaka-shi, Osaka 542-0081 (JP)
(74) Representative: Schaeberle, Steffen

(56) References cited:
- US-A- 5 137 375
- US-A- 6 095 692
- US-A1- 2002 066 502
- US-B1- 6 342 109

## Description

### BACKGROUND OF THE INVENTION

The present invention relates to a rolling bearing part to be used as a race of a large-sized rolling bearing for use in a steel-industry machine, such as a rolling bearing for supporting a roll neck of a mill.

In the background art, such a rolling bearing part has been manufactured by performing carburizing on a worked part raw material formed into a predetermined shape using case-hardened steel such as JIS SNCM815 (for example, see Non-Patent Document 1).

However, the background-art rolling bearing part is insufficient in corrosion resistance. The rolling bearing part (see closest prior art document US-A-5 137 375) may gather rust, from which flaking may be originated. Thus, there is a fear that the life of the rolling bearing part is shortened.

### Non-Patent Document 1

"How to select and use rolling bearings (new edition)", edited by Editorial Committee of How To Select and Use Rolling Bearings, published by Japanese Standards Association on 1 December 1976, page 395

### SUMMARY OF THE INVENTION

To solve the foregoing problem, an object of the invention is to provide a rolling bearing part superior in corrosion resistance and a method for manufacturing the same.

Arollingbearingpart according to the invention is formed out of steel containing 0.15-0.5 wt% of C, 1-2.5 wt% of Cr and 0.7-3.5 wt% of Ni. The Vickers' hardness is set to be 700-800 in a surface layer portion of a rolling surface. Carbide and carbonitride are precipitated in the surface layer portion. The area ratio of the total amount of the carbide and the carbonitride is not higher than 20%, and the average particle size of the carbide and the carbonitride is not larger than 2 µm. The rolling bearing part has relations of 0.85 wt%≤[C]+1.5[N]≤1.3 wt% and [N]≥0.05 wt% where [C] designates the C content of the surface layer portion, and [N] designates the N content of the surface layer portion.

The respective numeric values in the rolling bearing part according to the invention are restricted for the following reasons.

### C Content

C is an essential component for steel. When the C content is lower than 0.15 wt%, internal hardness required as a rolling bearing part cannot be secured. When the C content exceeds 0.5 wt%, the internal hardness is too high to secure the internal tenacity. It is preferable that the C content is 0.15-0.3 wt%.

### Cr Content

Cr has a property of prolonging the rolling fatigue life of a rolling bearing using the rolling bearing part while improving the corrosion resistance of the rolling bearing part. When the Cr content is lower than 1 wt%, the required rolling fatigue life and the required corrosion resistance cannot be secured. When the Cr content exceeds 2.5 wt%, coarse carbide and carbonitride are precipitated, and rust is originated from the carbide and the carbonitride, while the heat treatment performance deteriorates.

### Ni Content

Ni has a property of prolonging the rolling fatigue life of a rolling bearing using the rolling bearing part while improving the corrosion resistance of the rolling bearing part, and further improving the internal tenacity. When the Ni content is lower than 0.7 wt%, the required rolling fatigue life, the required corrosion resistance and the required internal tenacity cannot be secured. When the Ni content exceeds 3.5 wt%, the heat treatment performance deteriorates, while the retained austenite amount is too excessive to secure the required hardness. It is therefore preferable that the Ni content is 1.4-3.1 wt%.

### Vickers' Hardness

Optimum Vickers' hardness (Hv) as a rolling bearing is 700-800 in the surface layer portion of the rolling surface.

### Amount of Carbide and Carbonitride in Surface Layer Portion

Carbide and carbonitride are formed by performing a heat treatment including a carburizing effect andanitriding effect, for example, by performing carburizing and carbonitriding, performing carbonitriding, or performing carburizing and nitriding. The reason why the amount of the carbide and the carbonitride is restricted to be not higher than 20% in area ratio is that the corrosion resistance will deteriorate due to rust originated from the carbide and the carbonitride when the amount of the carbide and the carbonitride exceeds 20%. The area ratio has a lower limit in about 1%.

### Average Particle Size of Carbide and Carbonitride in Surface Layer Portion

The reason why the particle size is restricted to be not larger than 2 µm is that the corrosion resistance will deteriorate due to rust originated from the carbide and the carbonitride when the average particle size exceeds 2 µm.

### C Content [C] and N Content [N] in Surface Layer Portion

Both C and N have a property of increasing the hardness of the surface layer portion. However, C has a property of lowering the corrosion resistance while N has a property of improving the corrosion resistance. When the relations 0.85 wt%≤[C]+1.5[N]≤1.3 wt% and [N]≥0.05 wt% are satisfied, the corrosion resistance canbe improved while securing the required hardness of the surface layer portion.

In the rolling bearing part according to the invention, the aforementioned steel may further contain 0.05-0.5 wt% of Si, 0.1-1 wt% of Mn, and 1 wt% or less of Mo.

Here, the Si content, the Mn content and the Mo content are restricted for the following reasons.

### Si Content

Si has a property of making carbide and carbonitride finer. When the Si content is not higher than 0.05 wt%, such an effect cannot be obtained. Si is also an element suppressing invasion of carbon. When the Si content exceeds 0.5 wt%, formation of a required amount of carbide and carbonitride is inhibited. In addition, the plastic workability is also lowered. It is preferable that the Si content is 0.15-0.35 wt%.

### Mn Content

Mn is added to improve the hardenability of the steel. When the Mn content is lower than 0.1 wt%, the hardenability improvement effect cannot be obtained. When the Mn content exceeds 1 wt%, the retained austenite is prevented from being decomposed stably, while the workability deteriorates. It is preferable that the Mn content is 0.2-0.8 wt%.

### Mo Content

Mo is added to improve the hardenability of the steel. When the Mo content exceeds 1 wt%, the machinability is lowered. The lower limit of the Mo content is not zero. In order to obtain a sufficient hardenability improvement effect, it is preferable that the Mo content is 0.2 wt%.

That is, the rolling bearing part according to the invention is formed out of steel containing 0.15-0.5 wt% of C, 1-2.5 wt% of Cr, 0.7-3.5 wt% of Ni, 0.05-0.5 wt% of Si, 0.1-1 wt% of Mn, 1 wt% or less of Mo, and the balance of Fe and unavoidable impurities.

It is preferable that the rolling bearing part according to the invention is a race of a large-sized roller bearing whose outer diameter is not shorter than 300 mm, particularly not shorter than 400 mm, by way of example.

Here, the surface layer portion of the rolling surface denotes a depth portion having influence on the life in the rolling/sliding surface. For example, the surface layer portion is a portion up to a depth on which maximum shear stress causing inside-originated flaking acts. The depth depends on contact conditions. The depth is up to about 0.5 mm in most rolling/sliding parts.

A method for manufacturing a rolling bearing part according to the invention includes the steps of: performing carburizing at a soaking temperature of 930°C or higher upon a worked part raw material formed out of steel containing 0.15-0.5wt% of C, 1-2.5 wt% of Cr and 0.7-3.5 wt% of Ni; thereafter soaking the worked part raw material at 880-910°C in an atmosphere made of carburizing gas and NH₃ gas mixed in a ratio of 3-10% to 100% of the carburizing gas, and having a carbon potential of 1.2-1.4; thereafter quenching the worked part raw material; next performing intermediate annealing upon the worked part raw material; next heating the worked part raw material to 770-830°C and rapidly cooling the worked part raw material so as to perform quenching on the worked part raw material; and thereafter performing tempering upon the worked part raw material. Thus, obtained is a rolling bearing part having a Vickers' hardness of 700-800 in a surface layer portion of a rolling surface, having carbide and carbonitride precipitated in the surface layer portion, having an area ratio of a total amount of the carbide and the carbonitride set to be not higher than 20%, having an average particle size of the carbide and the carbonitride set to be not larger than 2 µm, and having relations of 0.85 wt%≤[C]+1.5[N]≤1.3 wt% and [N]≥0.05 wt% where [C] designates the C content of the surface layer portion, and [N] designates the N content of the surface layer portion.

In the method for manufacturing a rolling bearing part according to the invention, the heat treatment conditions are restricted for the following reasons. Incidentally, the reasons why the components/elements contained in the steel to be used are restricted are the same as those in the aforementioned rolling bearing part.

### Carburizing Atmosphere

Carburizing gas as a base of the carburizing atmosphere is not limited especially. It is, however, preferable that the carbon potential is set to be 1.3-1.5. When the carbon potential is lower than 1.3, a desired amount of carbon cannot be allowed to invade the surface layer portion of the part raw material. When the carbon potential exceeds 1.5, plenty of soot is generated in the heat treatment disadvantageously in term of operation.

### Carburizing Temperature

The reason why the soaking temperature in carburizing is restricted to be not lower than 930°C is to shorten the treatment time.

### Atmosphere in Treatment After Carburizing

The carbon potential of the atmosphere in the treatment after the carburizing is restricted to be 1.2 to 1.4 for the following reason. When the carbon potential is lower than 1.2, a desired amount of carbon cannot be allowed to invade the surface layer portion of the part raw material. When the carbon potential exceeds 1.4, plenty of soot is generated in the heat treatment disadvantageously in term of operation. Further, the amount of NH₃ gas mixed to the carburizing gas is restricted to be 3-10% for the following reason. When the amount is lower than 3%, a desired amount of nitrogen cannot be allowed to invade the surface layer portion of the part raw material. When the amount exceeds 10%, undecomposed residual NH₃ increases not to effectively contribute to precipitation of carbonitride in the surface layer portion of the part.

### Treatment Temperature after Carburizing

This temperature is restricted to be 880-910°C for the following reason. When the temperature is out of this range, the relationship between the C content [C] and the N content [N] in the surface layer portion cannot be set to satisfy 0.85 wt%≤[C]+1.5[N]≤1.3 wt%.

### Time of Carburizing and Time of Treatment after Carburizing

The treatment time of carburizing and the treatment time of soaking after the carburizing are not limited especially, but depend on the dimensions of the part raw material. In the case of the aforementioned race of the large-sized rolling bearing, the times are preferably set as follows. That is, it is preferable that the treatment time of carburizing is 15-100 hours, particularly 20-50 hours. This reason is to allow carbon to invade enough depth to secure the strength of the race. It is preferable that the treatment time of soaking after the carburizing is 5-20 hours, particularly 6-10 hours. This reason is to allow nitrogen to invade the surface layer portion up to a predetermined depth when it is necessary to secure the corrosion resistance, for example, in the case of a bearing for supporting a roll neck of a mill.

### Heating Temperature in Quenching

This temperature is restricted to be 770-830°C for the following reason. When the temperature is lower than 770°C, quenching is too imperfect to obtain desired hardness. When the temperature exceeds 830°C, the retained austenite amount becomes too excessive to obtain desired hardness.

### Heating Time of Intermediate Annealing and Heating Time of Quenching

The times are not limited especially, but depend on the dimensions of the part raw material. In the case of the aforementioned race of the large-sized rolling bearing, it is preferable that the heating time of intermediate annealing is 3-6 hours, the heating time of quenching is 0.5-3 hours.

### Effect of the Invention

In the rolling bearing part according to the invention, the surface layer portion of the rolling surface has surface hardness most suitable for use in a rolling bearing, while the corrosion resistance is superior. Since the corrosion resistance is superior, it is possible to prevent the occurrence of rust and the occurrence of flaking originated from the rust. As a result, it is possible to prolong the life.

According to the method for manufacturing a rolling bearing part according to the invention, it is possible to manufacture the rolling bearing part having effect as described above. In addition, by soaking at 880-910°C in the atmosphere made of carburizing gas and NH₃ gas mixed in a ratio of 3-10% to 100% of the carburizing gas, and having a carbon potential of 1.2-1.4 after predetermined carburizing, it is possible to manufacture a rolling bearing part having both strength required as a race of a large-sized rolling bearing and corrosion resistance particularly required as a bearing for supporting a roll neck of a mill. That is, the strength is secured by carburizing allowing carbon to invade the surface layer portion of the part raw material up to a sufficient depth from the surface, while nitriding required for securing the corrosion resistance can be performed effectively only on the surface layer portion by soaking in the aforementioned atmosphere after the carburizing.

### BRIEF DESCRIPTION OF DRAWINGS

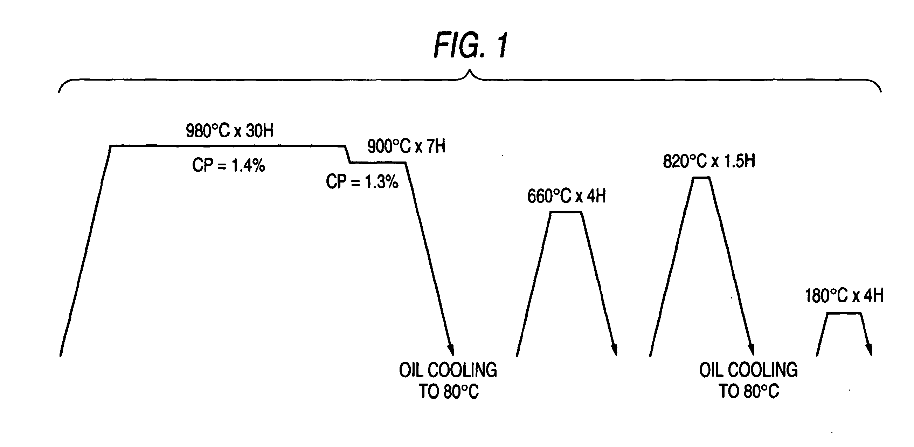

Fig. 1 is a diagram showing heat treatment conditions for manufacturing a rolling bearing race in Example 1.

### DETAILED DESCRIPTION OF PREFERRED EMBODIMENTS

A specific example of the invention will be described below together with a comparative example.

### Example 1

A raw material of a rolling bearing race having an outer diameter of 450 mm, an inner diameter of 400 mm and a width of 100 mm was formed out of steel containing 0.2 wt% of C, 1.2 wt% of Cr, 3.0 wt% of Ni, 0.25 wt% of Si, 0.5 wt% of Mn, 0.6 wt% of Mo, and the balance of Fe and unavoidable impurities.

Next, a heat treatment was performed on the raw material in the conditions shown in Fig. 1. That is, the raw material was soaked at 980°C for 30 hours in a carburizing atmosphere made of carburizing gas whose carbon potential was 1.4. After that, the temperature was dropped down to 900°C. Here, NH₃ gas was introduced at the ratio of 4% to 100% of the carburizing gas, and the raw material was soaked at 900°C for 7 hours, and next oil-cooled down to 80°C. Incidentally, the carbon potential of the atmosphere for soaking at 900°C was 1.3.

Next, intermediate annealing was performed on the raw material by soaking at 660°C for 4 hours. Next, the raw material was soaked at 780°C for 1.5 hours, and then oil-cooled down to 80°C. Thus, quenching was performed. Finally the raw material was soaked at 180°C for 4 hours so that tempering was performed. Thus, a rolling bearing race was manufactured.

The surface hardness of the surface layer portion of the race surface of the rolling bearing race was 760 in Vickers' hardness. The total amount of carbide and carbonitride precipitated in the surface layer portion was 9% in area ratio. The average particle size of the carbide and the carbonitride was 0.9 µm. Further, [C]+1.5[N] was 1.15 wt% and [N] was 0.2 wt% when [C] designates the C content of the surface layer portion and [N] designates the N content thereof.

### Comparative Example 1

A raw material of a rolling bearing race having an outer diameter of 450 mm, an inner diameter of 400 mm and a width of 100 mm was formed out of JIS SNCM815 containing 0.15 wt% of C, 0.8 wt% of Cr, 4.00 wt% of Ni, 0.20 wt% of Si, 0.40 wt% of Mn, 0.20 wt% of Mo, and the balance of Fe and unavoidable impurities.

Next, the raw material was soared at 980°C for 32 hours in a carburizing atmosphere made of carburizing gas whose carbon potential was 1.4. After that, the temperature was dropped down to 900°C, and next the raw material was oil-cooled down to 80°C. Next, intermediate annealing was performed on the raw material by soaking at 660°C for 4 hours. Next, the raw material was soaked at 790°C for 1.5 hours, and then oil-cooled down to 80°C. Thus, quenching was performed. Finally, the raw material was soaked at 180°C for 4 hours so that tempering was performed. Thus, a rolling bearing race was manufactured.

The surface hardness of the surface layer portion of the race surface of the rolling bearing race was 740 in Vickers' hardness. The total amount of carbide precipitated in the surface layerportionwas 3% in area ratio. The average particle size of the carbide was 0.7 µm. Further, the C content of the surface layer portion was 0.9 wt% and the N content thereof was 0 wt%.

### Evaluation Test

The rolling bearing races in Example 1 and Comparative Example 1 were degreased sufficiently, and then left as they were in a constant-temperature and constant-humidity tank at a temperature of 50°C and a humidity of 95% or higher. After a predetermined time had passed, the area ratio of rust was measured. Table 1 shows the result.

**Table 1**

| | 1 hour later | 24 hours later | 48 hours later | 96 hours later |
|---|---|---|---|---|
| Example 1 | 1% or lower | 1% or lower | 2% | 4% |
| Comparative Example 1 | 1% or lower | 2% | 15% | 30% |

## Claims

1. A rolling bearing part comprising steel including 0.15-0.5 wt% of C, 1-2.5 wt% of Cr and 0.7-3.5 wt% of Ni, wherein
a surface layer portion of a rolling surface of the rolling bearing part has a Vickers' hardness of 700-800,
carbide and carbonitride are precipitated in the surface layer portion,
an area ratio of a total amount of the carbide and the carbonitride is set to be not higher than 20%,
an average particle size of the carbide and the carbonitride is set to be not larger than 2 µm, and
relations of 0.85 wt%≤[C]+1.5[N]≤1.3 wt% and [N]≥0.05 wt% are held where [C] designates the C content of the surface layer portion, and [N] designates the N content of the surface layer portion.

2. A rolling bearing part according to Claim 1, wherein the C content of the steel is not lower than 0.15 wt% and not higher than 0.3 wt%.

3. A rolling bearing part according to Claim 1, wherein the Ni content of the steel is not lower than 1.4 wt% and not higher than 3.1 wt%.

4. A rolling bearing part according to Claim 1, wherein the steel further includes 0.05-0.5 wt% of Si, 0.1-1 wt% of Mn, and 1 wt% or less of Mo.

5. A rolling bearing part according to Claim 4, wherein the Si content of the steel is not lower than 0.15 wt% and not higher than 0.35 wt%.

6. A rolling bearing part according to Claim 4, wherein the Mn content of the steel is not lower than 0.2 wt% and not higher than 0.8 wt%.

7. A rolling bearing part according to Claim 4, wherein the Mo content of the steel is not lower than 0.2 wt% and not higher than 1 wt%.

8. A method of manufacturing a rolling bearing part, the method comprising the steps of:
performing carburizing at a soaking temperature of 930°C or higher upon a worked part raw material formed out of steel including 0.15-0.5 wt% of C, 1-2.5 wt% of Cr and 0.7-3.5 wt% of Ni;
soaking the worked part raw material at 880-910°C in an atmosphere made of carburizing gas and NH₃ gas mixed in a ratio of 3-10% to 100% of the carburizing gas, and having a carbon potential of 1.2-1.4;
quenching the worked part raw material;
performing intermediate annealing upon the worked part raw material;
heating the worked part raw material to 770-830°C and rapidly cooling the worked part raw material so as to perform quenching on the worked part raw material; and
performing tempering upon the worked part raw material,
whereby obtaining the rolling bearing part comprising steel including 0.15-0.5 wt% of C, 1-2.5 wt% of Cr and 0.7-3.5 wt% of Ni, wherein
a surface layer portion of a rolling surface of the rolling bearing part has a Vickers' hardness of 700-800,
carbide and carbonitride are precipitated in the surface layer portion,
an area ratio of a total amount of the carbide and the carbonitride is set to be not higher than 20%,
an average particle size of the carbide and the carbonitride is set to be not larger than 2 µm, and
relations of 0.85 wt%≤[C]+1.5[N]≤1.3 wt% and [N]≥0.05 wt% are held where [C] designates the C content of the surface layer portion, and [N] designates the N content of the surface layer portion.

## Patentansprüche

1. Wälzlagerteil, umfassend einen Stahl, der 0,15 - 0,5 Gew. % an C, 1 - 2,5 Gew. % an Cr und 0,7 - 3,5 Gew. % an Ni beinhaltet, wobei
ein Oberflächenschichtbereich einer Wälzfläche des Wälzlagerteils eine Vickershärte von 700 - 800 aufweist,
Karbid und Carbonitrit im Oberflächenschichtbereich ausgefällt sind,
ein Flächenverhältnis einer Gesamtmenge des Karbids und des Carbonitrits auf nicht höher als 20 % festgelegt ist,
eine Durchschnittspartikelgröße des Karbids und des Carbonitrits auf nicht größer als 2 µm festgelegt ist, und
Verhältnisse von 0,85 Gew. % ≤ [C] + 1,5 [N] ≤ 1,3 Gew. % und [N] ≥ 0,05 Gew. % gehalten werden, wobei [C] den C-Gehalt des Oberflächenschichtbereichs bezeichnet und [N] den N-Gehalt des Oberflächenschichtbereichs bezeichnet.

2. Wälzlagerteil nach Anspruch 1, wobei der C-Gehalt des Stahls nicht geringer als 0,15 Gew. % und nicht höher als 0,3 Gew. % ist.

3. Wälzlagerteil nach Anspruch 1, wobei der Ni-Gehalt des Stahls nicht geringer als 1,4 Gew. % und nicht höher als 3,1 Gew. % ist.

4. Wälzlagerteil nach Anspruch 1, wobei der Stahl ferner 0,05 - 0,5 Gew. % an Si, 0,1 - 1 Gew. % an Mn und 1 Gew. % oder weniger an Mo beinhaltet.

5. Wälzlagerteil nach Anspruch 4, wobei der Si-Gehalt des Stahls nicht geringer als 0,15 Gew. % und nicht höher als 0,35 Gew. % ist.

6. Wälzlagerteil nach Anspruch 4, wobei der Mn-Gehalt des Stahls nicht geringer als 0,2 Gew. % und nicht höher als 0,8 Gew. % ist.

7. Wälzlagerteil nach Anspruch 4, wobei der Mo-Gehalt des Stahls nicht geringer als 0,2 Gew. % und nicht höher als 1 Gew. % ist.

8. Verfahren zur Herstellung eines Wälzlagerteils, wobei das Verfahren folgende Schritte aufweist:
Ausführen eines Aufkohlens bei einer Wärmebehandlungstemperatur von 930 °C oder höher an einem bearbeiteten Rohmaterialteil, das aus einem Stahl gebildet ist, der 0,15 - 0,5 Gew. % an C, 1 - 2,5 Gew. % an Cr und 0,7 - 3,5 Gew. % an Ni beinhaltet;
Wärmebehandeln des bearbeiteten Rohmaterialteils bei 880 - 910 °C in einer Atmosphäre, die aus einem Aufkohlungsgas und NH₃-Gas hergestellt ist, das in einem Verhältnis von 3 - 10 % auf 100 % des Aufkohlungsgases gemischt ist und einen Kohlenstoffpegel von 1,2 - 1,4 aufweist;
Abschrecken des bearbeiteten Rohmaterialteils;
Ausführen eines Zwischenglühens am bearbeiteten Rohmaterialteil;
Erhitzen des bearbeiteten Rohmaterialteils auf 770 - 830 °C und rasches Abkühlen des bearbeiteten Rohmaterialteils, um ein Abschrecken am bearbeiteten Rohmaterialteil auszuführen; und
Ausführen eines Temperns am bearbeiteten Rohmaterialteil,
wobei das Wälzlagerteil erhalten wird, das einen Stahl umfasst, der 0,15 - 0,5 Gew. % an C, 1 - 2,5 Gew. % an Cr und 0,7 - 3,5 Gew. % an Ni beinhaltet, wobei
ein Oberflächenschichtbereich einer Wälzfläche des Wälzlagerteils eine Vickershärte von 700 - 800 aufweist,
Karbid und Carbonitrit im Oberflächenschichtbereich ausgefällt sind,
ein Flächenverhältnis einer Gesamtmenge des Karbids und des Carbonitrits auf nicht höher als 20 % festgelegt ist,
eine Durchschnittspartikelgröße des Karbids und des Carbonitrits auf nicht größer als 2 µm festgelegt ist, und
Verhältnisse von 0,85 Gew. % ≤ [C] + 1,5 [N] ≤ 1,3 Gew. % und [N] ≥ 0,05 Gew. % gehalten werden, wobei [C] den C-Gehalt des Oberflächenschichtbereichs bezeichnet und [N] den N-Gehalt des Oberflächenschichtbereichs bezeichnet.

## Revendications

1. Pièce de palier à roulement comprenant un acier comportant de 0,15 à 0,5 % en poids de C, de 1 à 2,5 % en poids de Cr et de 0,7 à 3,5 % en poids de Ni, dans laquelle :
une partie de couche superficielle de surface de roulement de la pièce de palier à roulement présente une dureté Vickers de 700 à 800,
les carbure et carbonitrure sont précipités dans la partie de couche superficielle,
un rapport surfacique de la quantité totale de carbure et de carbonitrure est défini de manière à ne pas être supérieur à 20%,
une taille moyenne de particule du carbure et du carbonitrure est définie de manière à ne pas être supérieure à 2 µm, et
les relations : "0,85 % en poids ≤ [C]+1,5*[N] ≤ 1,3 % en poids" et "[N] ≥ 0,05 % en poids", dans lesquelles [C] indique la teneur en C de la partie de couche superficielle, et [N] indique la teneur en N de la partie de couche superficielle, sont conservées.

2. Pièce de palier à roulement selon la revendication 1, dans laquelle la teneur en C de l'acier n'est pas inférieure 0,15 % en poids et pas supérieure à 0,3 % en poids.

3. Pièce de palier à roulement selon la revendication 1, dans laquelle la teneur en Ni de l'acier n'est pas inférieure 1,4 % en poids et pas supérieure à 3,1 % en poids.

4. Pièce de palier à roulement selon la revendication 1, dans laquelle l'acier comporte, en outre, de 0,05 à 0,5 % en poids de Si, de 0,1 à 1 % en poids de Mn, et 1 % en poids de Mo ou moins.

5. Pièce de palier à roulement selon la revendication 4, dans laquelle la teneur en Si de l'acier n'est pas inférieure 0,15 % en poids et pas supérieure à 0,35 % en poids.

6. Pièce de palier à roulement selon la revendication 4, dans laquelle la teneur en Mn de l'acier n'est pas inférieure 0,2 % en poids et pas supérieure à 0,8 % en poids.

7. Pièce de palier à roulement selon la revendication 4, dans laquelle la teneur en Mo de l'acier n'est pas inférieure 0,2 % en poids et pas supérieure à 1 % en poids.

8. Procédé de fabrication d'une pièce de palier à roulement, le procédé comprenant les étapes de :
exécution d'une cémentation à une température de maintien supérieure ou égale à 930°C sur un matériau d'ébauche de pièce usinée composée en un acier comportant de 0,15 à 0,5 % en poids de C, de 1 à 2,5 % en poids de Cr et de 0,7 à 3,5 % en poids de Ni;
maintien du matériau d'ébauche de pièce usinée entre 880 à 910°C dans une atmosphère composée d'un gaz de cémentation et de NH₃ gazeux mélangés suivant un rapport de 3 à 10 % sur 100 % du gaz de cémentation, et présentant un potentiel de carbone de 1,2 à 1,4 ;
trempe du matériau d'ébauche de pièce usinée ;
exécution d'un recuit intermédiaire sur le matériau d'ébauche de pièce usinée ;
chauffage du matériau d'ébauche de pièce usinée entre 770 à 830°C et refroidissement rapide du matériau d'ébauche de pièce usinée afin d'exécuter une trempe du matériau d'ébauche de pièce usinée ; et
exécution d'un revenu sur le matériau d'ébauche de pièce usinée,
obtenant de cette manière la pièce de palier à roulement composée d'un acier comportant de 0,15 à 0,5 % en poids de C, de 1 à 2,5 % en poids de Cr et de 0,7 à 3,5 % en poids de Ni, dans laquelle :
une partie de couche superficielle d'une surface de roulement de la pièce de palier à roulement présente une dureté Vickers de 700 à 800,
les carbure et carbonitrure sont précipités dans la partie de couche superficielle,
un rapport surfacique de la quantité totale de carbure et de carbonitrure est défini de manière à ne pas être supérieur à 20%,
une taille moyenne de particule du carbure et du carbonitrure est définie de manière à ne pas être supérieure à 2µm, et
les relations : "0,85 % en poids ≤ [C]+1,5*[N] ≤ 1,3 % en poids" et "[N] ≥ 0,05 % en poids", dans lesquelles [C] indique la teneur en C de la partie de couche superficielle, et [N] indique la teneur en N de la partie de couche superficielle, sont conservées.
